Europäisches Patentamt

European Patent Office

Office européen des brevets

(19)

(11) Veröffentlichungsnummer: **0 294 752**
**A1**

(12) **EUROPÄISCHE PATENTANMELDUNG**

(21) Anmeldenummer: 88109028.6

(22) Anmeldetag: 07.06.88

(51) Int. Cl.⁴: **B63B 35/82**

(30) Priorität: 09.06.87 DE 3719192

(43) Veröffentlichungstag der Anmeldung:
14.12.88 Patentblatt 88/50

(84) Benannte Vertragsstaaten:
AT BE CH DE ES FR GB GR IT LI LU NL SE

(71) Anmelder: **Boge A.G.**
**Bogestrasse 50**
**D-5208 Eitorf/Sieg(DE)**

Anmelder: **POLARIS GMBH**
**Rosenweg 6a**
**D-5960 Olpe(DE)**

(72) Erfinder: **Blech, Siegfried**
**Sonderner Strasse 10**
**D-5960 Olpe-Sondern(DE)**

(54) **Rigg für ein Surfbrett.**

(57) Rigg für ein Surfbrett, bestehend aus einem Mast und einem Gabelbaum, an denen ein Segel befestigt ist, wobei mindestens ein Ende des Mastes und/oder die Enden der Griffrohre einer Seite des Gabelbaumes zur Verkürzung oder zur Verlängerung mit teleskopartig ineinanderschiebbaren Rohren (2, 5, 6) versehen sind. Um eine stufenlose Verstellung der teleskopartig ineinanderschiebbaren Rohre gegenüber dem Mast bzw. der Griffrohre zu gewährleisten, ist vorgesehen, daß die Außenfläche (1) des Innenrohres (2) eine elastische Oberfläche aufweist, wobei ein Klemmring (3) sich einerseits mit seiner Innenfläche direkt oder indirekt auf der elastischen Oberfläche des Innenrohres, und andererseits am, dem Mast oder dem Griffrohr zugehörigen Außenrohr (5, 6) abstützt.

EP 0 294 752 A1

Figur 2

## Rigg für ein Surfbrett

Die Erfindung bezieht sich auf ein Rigg für ein Surfbrett, bestehend aus einem Mast und einem Gabelbaum, an denen ein Segel befestigt ist, wobei mindestens ein Ende des Mastes und/oder die Enden der Griffrohre einer Seite des Gabelbaumes zur Verkürzung oder zur Verlängerung mit teleskopartig ineinanderschiebbaren Rohren versehen sind.

Es sind bereits Surfbretter bekannt, bei denen der Mast sowohl am oberen Ende verlängerbar als auch am unteren Ende verkürzbar oder ebenfalls verlängerbar ist. Mit Vorrichtung gleicher Art ist auch eine Verlängerung bzw. Verkürzung der Griffrohre des Gabelbaumes möglich. Die variable Einstellung des Mastes dient dazu, daß Personen unterschiedlicher Größe eine optimale Fahrposition einnehmen können oder auch zur Verwendung unterschiedlich großer Segel benutzt werden können. Diese Vorrichtungen zur Verlängerung des Mastes bzw. der Griffrohre bestehen aus teleskopartig ineinanderschiebbaren Rohren, wobei über Stifte, Federn oder auch Nuten im Innenrohr bestimmte vorgegebene Abstände zur Verlängerung oder Verkürzung des Rohres einstellbar sind. Nachteilig ist hierbei, daß lediglich Abstände der vorgegebenen Größe einstellbar sind.

Aufgabe der Erfindung ist es, ein Rigg für ein Surfbrett so zu verbessern, daß eine Verlängerung bzw. Verkürzung des Mastes und/oder der Griffrohre des Gabelbaumes auf einfache Weise, ohne Zuhilfenahme von Werkzeug, stufenlos verstellbar erfolgen kann.

Zur Lösung dieser Aufgabe ist erfindungsgemäß vorgesehen, daß die Aufenfläche des Innenrohres eine elastische Oberfläche aufweist, wobei ein Klemmring sich einerseits mit seiner Innenfläche direkt oder indirekt auf der elastischen Oberfläche des Innenrohres, und andererseits am, dem Mast oder dem Griffrohr, zugehörigen Außenrohr abstützt.

Vorteilhaft ist bei dieser Ausbildung, daß sich der Klemmring während des Betriebes des Surfbrettes durch Eindrücken in die elastische Oberfläche des Innenrohres eindrückt und somit eine axiale Fixierung gewährleistet. Diese axiale Fixierung des Klemmringes kann an jeder beliebigen Stelle des Innenrohres in der elastischen Oberfläche erfolgen. Es kann somit ohne bestimmte Vorkehrungen eine stufenlose Verstellung des Mastes in Höhe und Länge wie auch der Griffrohre in ihrer Länge erfolgen. Die stufenlose Verstellung kann dabei problemlos ohne jegliches Werkzeug durchgeführt werden.

Nach einem weiteren wesentlichen Merkmal ist vorgesehen, daß als elastische Oberfläche eine Oberflächenbeschichtung vorgesehen oder eine Gummischicht auf die Außenfläche des Innenrohres aufvulkanisiert ist.

In weiterer Ausgestaltung der Erfindung weist der Klemmring auf der dem Mast bzw. Griffrohr zugewandten Seite, ausgehend von seiner Innenfläche, über mindestens einen Teil seiner axialen Länge eine konische Erweiterung auf, die zusammen mit der Außenfläche des Innenrohres einen Ring aufnimmt.

Hierbei ist von Vorteil, daß der Klemmring durch die konische Innenfläche einen Ring derartig radial beaufschlagt, daß der Ring sich in der elastischen Oberfläche des Innenrohres eindrückt und somit an jeder beliebigen Stelle des Innenrohres seine Aufnahmenut selbst formt. Nach Entlastung des Klemmringes wird durch die elastische Oberfläche die Nut im Innenrohr verschwinden und das Rohr wird danach seinen ursprünglichen Zustand wieder einnehmen.

Ein weiteres Merkmal sieht vor, daß als Ring ein O-Ring verwendet wird, dessen Werkstoff härter ist als die elastische Oberfläche des Innenrohres. Dabei läßt sich mit Vorteil als Ring ein geschlitzter, federnder Ring aus Metall, Kunststoff oder dergleichen verwenden. Vorteilhaft ist, daß als einfachste Ausführungsform ein O-Ring aus Gummi verwendet wird, dessen Härte geringfügig größer ist als die Härte der elastischen Oberfläche des Innenrohres.

In Ausgestaltung der Erfindung ist vorgesehen, daß der Klemmring eine Innenfläche aufweist, die mindestens zwei verschieden große Durchmesser vorsieht, wobei der kleinere Durchmesser dem Außendurchmesser des Innenrohres entspricht und die über das Außenrohr des Mastes bzw. des Griffrohres auf den im Durchmesser größeren Bereich des Klemmringes aufgebrachte Kraft, den Klemmring axial fixiert.

Bei dieser Ausführungsform ist von Vorteil, daß aufgrund der unterschiedlich großen Innendurchmesser des Klemmringes, der Mast bzw. das Griffrohr auf den Klemmring eine Hebelwirkung erzielt, wobei der mit dem größeren Innendurchmesser versehene Teil des Klemmringes aufgrund der axialen Vorspannung bestrebt ist, sich mit seinem äußeren Ende am Innenrohr anzulehnen und dadurch im Übergangsbereich zwischen den beiden unterschiedlich großen Innenbohrungen ein Abkanten des Stützringes erfolgt.

Nach einem weiteren wesentlichen Merkmal ist vorgesehen, daß die axiale Fixierung des Klemmringes durch Formschluß erfolgt. Dabei ist mit Vorteil der kleinere zylindrische Innenbereich des Klemmringes als Schneidkante ausgebildet. Vorteilhaft ist dabei, daß durch die besondere Gestaltung der Innenkontur des Klemmringes ein Festklemmen durch einen Schneidringefekt bei axialer Druck beaufschlagung zwischen dem Innenrohr und dem Mast bzw. dem Griffrohr auftritt.

In weiterer Ausgestaltung der Erfindung ist vorgesehen, daß die axiale Fixierung des Klemmringes durch Kraftschluß erfolgt. Dabei besteht mit Vorteil die Innenfläche des Klemmringes aus zwei verschieden großen zylindrischen Bereichen, so daß durch die axiale Vorspannung, die das Segel auf das Innenrohr aufbringt, auf den im Innendurchmesser größeren Bereich wiederum die Hebelwirkung entsteht und der Klemmring im übergangsbereich zwischen dem kleineren und dem größeren zylindrischen Bereich abzukippen versucht und dadurch den Kraftschluß herstellt.

In Ausgestaltung der Erfindung ist vorgesehen, daß der Klemmring als in Axialrichtung geschlitzter Ring ausgebildet ist. Vorteilhaft ist dabei, daß durch eine entsprechende Vorspannung bereits ein Kraft- oder Formschluß durch den Ring selbst erfolgen kann, so daß bei weiterer Beaufschlagung durch die axiale Kraft des Segels auf das Innenrohr gegenüber dem Mast bzw. dem Griffrohr eine Fixierung des Klemmringes in zwei Stufen erfolgen kann.

Bevorzugte Ausführungsbeispiele der Erfindung sind in den Zeichnungen schematisch dargestellt.

Es zeigt:

Figur 1 ein Rigg, bestehend aus Mast, Segel und Griffrohren in Ansicht

Figur 2 bis 4 verschiedene Ausführungsformen von Klemmringen mit jeweils einem weiteren Ring

Figur 5 bis 8 verschiedene Ausführungsformen von Klemmringen bei denen durch Hebelwirkung eine axiale Fixierung erfolgt.

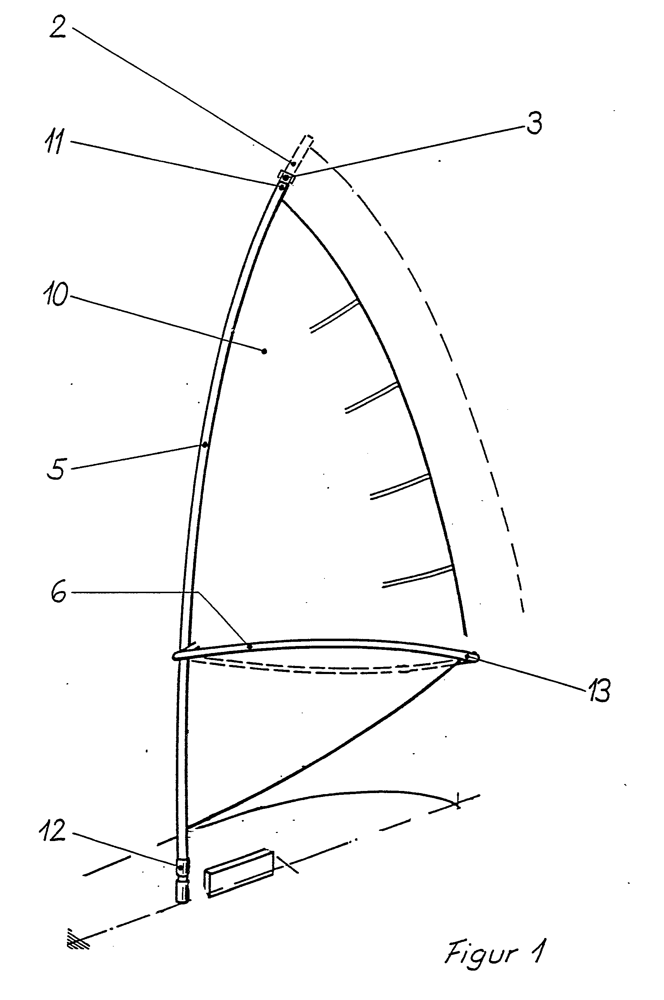

In der Figur 1 ist eine Rigg für ein Surfbrett gezeigt, bestehend aus dem Mast 5, dem Segel 10 und den Griff rohren 6 des Gabelbaumes. Der Mast 5 läßt sich am oberen Ende 11 bzw. am unteren Ende 12 verlängern bzw. verkürzen, in dem ein Innenrohr 2 teleskopartig in das Rohr des Mastes 5 hineinverschiebbar ist und durch einen Klemmring 3 axial fixiert wird. Die Griffrohre 6 des Riggs lassen sich ebenfalls an ihrem hinteren Ende 13 nach dem gleichen Prinzip verlängern oder verkürzen.

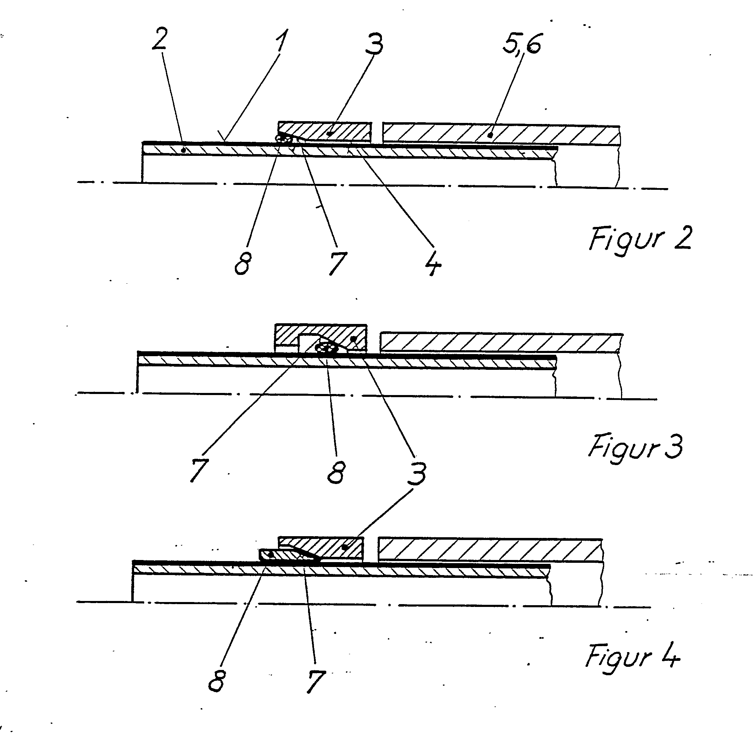

Die Figur 2 zeigt ein Ausführungsbeispiel, bei dem in das Außenrohr des Mastes 5 bzw. des Griffrohres 6 ein Innenrohr 2 teleskopartig hineinverschiebbar angeordnet ist. Die Außenfläche 1 des Innenrohres 2 ist elastisch z.B. durch aufvulkanisierten Gummi oder einer elastischen Beschichtung ausgebildet. Der Klemmring 3 zeigt auf seiner Innenfläche 4, dem Mast 5 bzw. dem Griffrohr 6 zugewandt, eine konische Erweiterung 7. Die konische Erweiterung 7 nimmt zusammen mit der Außenfläche 1 des Innenrohres 2 einen Ring 8 auf, wobei durch axiale Belastung des Klemmringes 3 in Richtung des Mastes 5 bzw. des Griffrohres 6, der Ring 8 über die konische Erweiterung 7 in die Außenfläche 1 des Innenrohres 2 hineingedrückt wird. Auf diese Weise wird durch die ständig wirkende Kraft des Segels eine axiale Fixierung des Innenrohres 2 gegenüber dem Mast 5 bzw. dem Griffrohr 6 erzielt. Nach Entlasten und Zurückschieben des Klemmringes 3 ist der Ring 8 frei und die Außenfläche 1 des Innenrohres 2 nimmt wiederum ihre unsprüngliche Form an. Das Prinzip beruht darauf, daß der Ring 8 aus einem härteren Werkstoff wie die elastische Außenfläche 1 des Innenrohres 2 hergestellt ist.

In der Figure 3 handelt es sich im Prinzip um eine Ausführung wie in Figur 2 bereits dargestellt, mit dem Unterschied, daß der Klemmring 3 eine entsprechend geformte Nut aufweist, in der die konische Erweiterung 7 angeordnet ist und der Ring 8 gleichzeitig unverlierbar gehalten ist.

Nach dem Ausführungsbeispiel der Figur 4 besitzt der Klemmring 3 wiederum eine konische Erweiterung 7, die mit einer entsprechenden konischen Schräge des Ringes 8 zu sammenarbeitet. Dabei ist es möglich, daß der Ring 8 in Längsrichtung geschlitzt ausgebildet ist und bereits selbst eine radiale Vorspannung besitzt. Auch bei den Ausführungsbeispielen der Figur 3 und 4 drückt sich jeweils der Ring 8 in die elastische Außenfläche 1 des Innenrohres 2 ein und gewährt somit eine axiale Fixierung des Innenrohres 2 gegenüber dem Mast 5 bzw. dem Griffrohr 6.

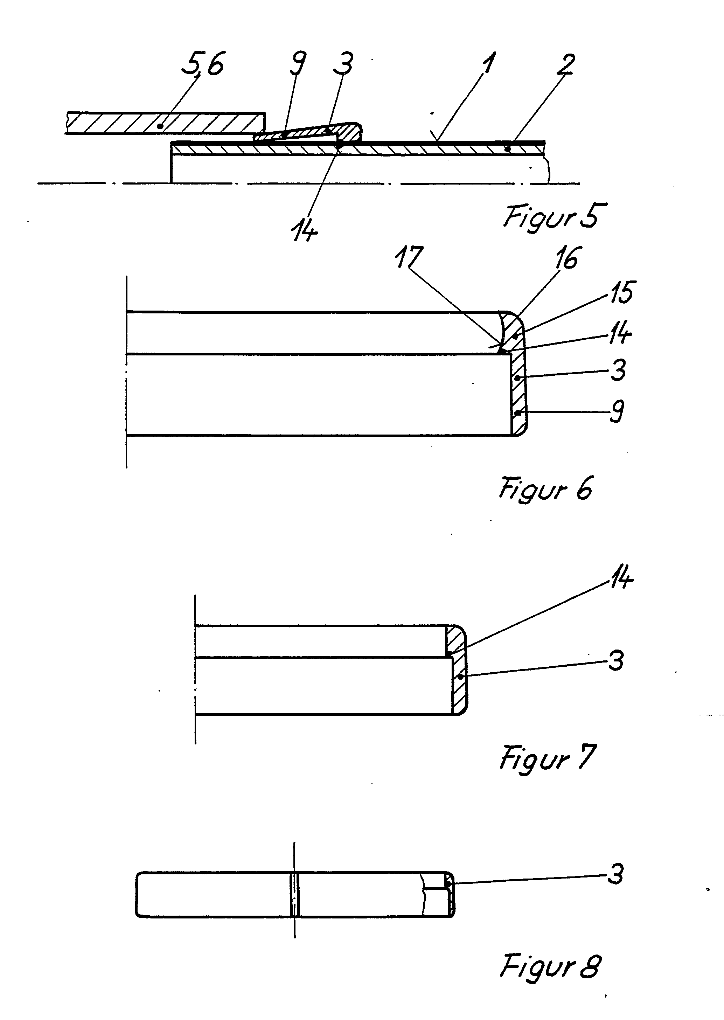

In der Figur 5 ist eine weitere Ausführung gezeigt, bei dem das Innenrohr 2 teleskopartig in das Außenrohr des Mastes 5 bzw. des Griffrohres 6 einschiebbar ist. Die Außenfläche 1 des Innenrohres 2 ist elastisch ausgebildet. Der Klemmring 3 erhält durch das Innenrohr 2 einen axialen Druck, wobei der im Durchmesser größere Bereich 9 des Klemmringes 3 über den Mast 5 bzw. das Griffrohr 6 eine Hebelwirkung erzielt. Durch diese Hebelwirkung wird der Klemmring 3 abgewinkelt und die Vorderkante 14 des Klemmringes 3 drückt sich dabei in die elastische Außenfläche 1 des Innenrohres 2 und fixiert somit die Teile gegeneinander.

Figur 6 zeigt einen Klemmring 3, bei dem zwischen dem im Durchmesser größeren Bereich 9 und dem im kleineren Bereich 15 eine Vorderkante 14 entsteht, die bei hohler Ausbildung 16 des im Durchmesser kleineren Bereiches 15 eine Schneidkante 17 entstehen läßt.

Figur 7 zeigt einen Klemmring 3 der aus zwei verschieden großen zylindrischen Bereichen besteht. Auch bei Abkippen dieses Klemmringes bildet die Vorderkante 14 gegenüber dem Innenrohr 2 eine linienförmige Berührungsfläche, die sich in die Außenfläche 1 eindrückt. Zur Erzielung einer ersten Vorspannkraft ist der in Figur 8 dargestellte Klemmring 3 in axialer Richtung geschlitzt ausgebildet. Hierbei wird zu der Vorspannkraft des Klemmringes 3 noch die axiale Kraft des Segels überlagert, so daß eine Fixierung in zwei Stufen erfolgt.

Bezugszeichenliste

   1 - Außenfläche
   2 - Innenrohr
   3 - Klemmring
   4 - Innenfläche
   5 - Mast
   6 - Griffrohr
   7 - konische Erweiterung
   8 - Ring
   9 - größerer Bereich des Klemmringes
  10 - Segel
  11 - oberes Ende des Mastes
  12 - unteres Ende des Mastes
  13 - hinteres Ende des Riggs
  14 - Vorderkante
  15 - kleinerer Bereich
  16 - hohle Fläche
  17 - Schneidkante

**Ansprüche**

1. Rigg für ein Surfbrett, bestehend aus einem Mast und einem Gabelbaum, an denen ein Segel befestigt ist, wobei mindestens ein Ende des Mastes und/oder die Enden der Griffrohre einer Seite des Gabelbaumes zur Verkürzung oder zur Verlängerung mit teleskopartig ineinanderschiebbaren Rohren versehen sind,
dadurch gekennzeichnet,
daß die Außenfläche (1) des Innenrohres (2) eine elastische Oberfläche aufweist, wobei ein Klemmring (3) sich einerseits mit seiner Innenfläche (4) direkt oder indirekt auf der elastischen Oberfläche des Innenrohres (2), und andererseits am, dem Mast (5) oder dem Griffrohr (6) zugehörigen Außenrohr abstützt.

2. Rigg nach Anspruch 1,
dadurch gekennzeichnet,
daß als elastische Oberfläche eine Oberflächenbeschichtung vorgesehen ist.

3. Rigg nach Anspruch 1,
dadurch gekennzeichnet,
daß als elastische Oberfläche eine Gummischicht auf die Außenfläche (1) des Innenrohres (2) aufvulkanisiert ist.

4. Rigg nach Anspruch 1,
dadurch gekennzeichnet,
daß der Klemmring (3) auf der dem Mast (5) bzw. Griffrohr (6) zugewandten Seite, ausgehend von seiner Innenfläche (4), über mindestens einen Teil seiner axialen Länge eine konische Erweiterung (7) aufweist, die zusammen mit der Außenfläche (1) des Innenrohres (2) einen Ring (8) aufnimmt.

5. Rigg nach Anspruch 4,
dadurch gekennzeichnet,
daß als Ring (8) ein O-Ring verwendet wird, dessen Werkstoff härter ist als die elastische Oberfläche des Innenrohres (2).

6. Rigg nach Anspruch 4,
dadurch gekennzeichnet,
daß als Ring (8) ein geschlitzter, federnder Ring aus Metall, Kunststoff oder dergleichen verwendet wird.

7. Rigg nach Anspruch 1,
dadurch gekennzeichnet,
daß der Klemmring (3) eine Innenfläche (4) aufweist, die mindestens zwei verschieden große Durchmesser vorsieht, wobei der kleinere Durchmesser dem Außendurchmesser des Innenrohres (2) entspricht und die über das Außenrohr des Mastes (5) bzw. des Griffrohres (6) auf den im Durchmesser größeren Bereich (9) des Klemmringes (3) aufgebrachte Kraft den Klemmring (3) axial fixiert.

8. Rigg nach Anspruch 7,
dadurch gekennzeichnet,
daß die axiale Fixierung des Klemmringes (3) durch Formschluß erfolgt.

9. Rigg nach Anspruch 7,
dadurch gekennzeichnet,
daß der kleinere Durchmesser des Klemmringes (3) als Schneidkante ausgebildet ist.

10. Rigg nach Anspruch 7,
dadurch gekennzeichnet,
daß die axiale Fixierung des Klemmringes (3) durch Kraftschluß erfolgt.

11. Rigg nach Anspruch 7,
dadurch gekennzeichnet,
daß die Innenfläche des Klemmringes (3) aus zwei verschieden großen zylindrischen Bereichen besteht.

12. Rigg nach Anspruch 7,
dadurch gekennzeichnet,
daß der Klemmring (3) als in Axialrichtung geschlitzter Ring ausgebildet ist.

Figur 1

Figur 2

Figur 3

Figur 4

5,6  9  3  1  2

14

Figur 5

17  16  15

14

3

9

Figur 6

14

3

Figur 7

3

Figur 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 209 756 (SCAGLIA)<br>* Zusammenfassung; Figuren 1-3 *<br>--- | 1 | B 63 B 35/82 |
| A | DE-A-3 143 286 (CONTINENTAL)<br>* Seite 2, Zeilen 16-19 *<br>--- | 1 | |
| A | GB-A-2 155 882 (SCHUTZ-WERKE)<br>* Figuren 2-4 *<br>--- | 1 | |
| A | GB-A-1 327 574 (BRASSINGTON)<br>* Figuren 1,2 *<br>----- | 1 | |

**RECHERCHIERTE SACHGEBIETE (Int. Cl.4)**

B 63 B
F 16 B

Der vorliegende Recherchenbericht wurde für alle Patentansprüche erstellt

| Recherchenort | Abschlußdatum der Recherche | Prüfer |
|---|---|---|
| DEN HAAG | 13-09-1988 | HUNT A.E. |

EPO FORM 1503 03.82 (P0403)